# EUROPEAN PATENT APPLICATION

(11) **EP 0 797 085 A1**
(43) Date of publication of application: **24.09.1997**
(21) Application number: 97104505.9
(22) Date of filing: 17.03.1997
(51) Int. Cl.: G01L 9/00, G01L 9/04, G01L 7/08

(54) **Pressure sensor and process for producing same**

(30) Priority: 22.03.1996 IT TO960221
(71) Applicant: BITRON S.p.A., 10064 Pinerolo (Torino) (IT)
(72) Inventor: Caratto, Danilo, 10100 Torino (IT)
(74) Representative: Lotti, Giorgio

(57) **Abstract**

A pressure sensor, in particular suitable for use with motor vehicles, comprises a body (4) with an elastic means (8) suitable be deformed by pressure, is provided with a microelectronic circuit (9) with a resistive strain gauge. The deformable means is obtained as an integral part of the body (4). The microelectronic circuit (9) is realised using the thin-film technique, and is connected to an amplification (40) circuit comprising temperature compensation means. The invention further relates to the manufacturing process of said sensor.

## Description

The present invention refers to a pressure sensor or transducer, usually known as pressure switch, in particular of the electronic type, and to its manufacturing process.

In particular the invention refers to the type of sensors which utilise, for the pressure measure, strain transducer means associated with elastic means suitable to deformation by said pressure, positioned on a substantially cylindrical body, in direct contact with the environment and/or the element to be pressure controlled. Said strain transducer means or strain gauge means, are formed by resistive bridge electric circuits, very small in size, and, particularly, with minimum thickness.

In current production sensors, these are integral with a very thin metallic diaphragm, e.g. by bonding. Said diaphragm, which is in effect the suitable to deformation means, is then connected to one end of a cylindrical hollow body, used as support means, which is put in contact with the environment or the element to be checked. In other embodiments the diaphragm is integral part of the cylindrical hollow body.

Other sensor types, in particular the ones used in the laboratories, provide that on said diaphragm, connected to the body in several different ways, the strain gauge circuit is positioned using the thin film technology upon deposition of an insulation material layer.

Further, the sensor contains, on appropriate support elements e.g. thick film hybrid circuits, amplifications means of the strain gauge output signal, provided with electromagnetic interference (EMI) filters, and protected by a Faraday cage. The amplification circuit can also be provided with thermal compensation means, to avoid signal changes not related to pressure.

The printed circuit bonding to the diaphragm which is the sensitive portion of the sensor, can however, in time, have sealing problems, due to possible manufacturing defects, taking into account that we are not dealing with a single, lab equipment production, but with mass-production. In fact the production of said sensors is mainly directed to the use in motor vehicles, e.g. to measure the pressure of the conditioning, power brake and power steering systems, or of the injection system or further of the active suspensions and in general of all the applications wherein it is necessary to check the pressure.

The present invention scope is therefore to manufacture a sensor fit for mass-production without the aforementioned inconveniences.

A further scope of the invention is to provide a manufacturing process for such sensor.

Such scope is achieved, according to the present invention, by a pressure sensor suitable, in particular for use in motor vehicles, comprising a body supporting an elastic means suitable to be deformed by the applied pressure, provided with a microelectronic circuit comprising a resistive strain gauge, characterised in that:
- said means suitable to deformation is obtained as an integral part of the body of said sensor;
- said microelectronic circuit is realised using the thin-film technique, and is connected to an amplification circuit comprising temperature compensation means.

Correspondingly, the process according to the invention comprises the following operations:
- lapping, through several subsequent steps, of the surface of the diaphragm suitable to deformation wherein it will be obtained the thin film circuit comprising a strain gauge;
- depositing of an insulating solid substrate through a chemical plasma process;
- depositing the strain gauge resistive circuit and the relevant conductive tracks by metal sputtering, making use of multiple masking means and litho-photographic systems for providing a proper layout.

Further characteristics and advantages of the present invention will be evident through the following detailed description made with reference to the attached drawings provided only as a non limiting example, wherein:
- - Figure 1: is a section view of a sensor according to the invention;
- - Figures 2-6: are block diagrams of several embodiments of the functions integrated in the circuit comprising the strain gauge, included inside the sensor according to the invention;
- Figures 2a-6a: show the electrical circuits corresponding respectively to the block diagrams of Figures 2-6.

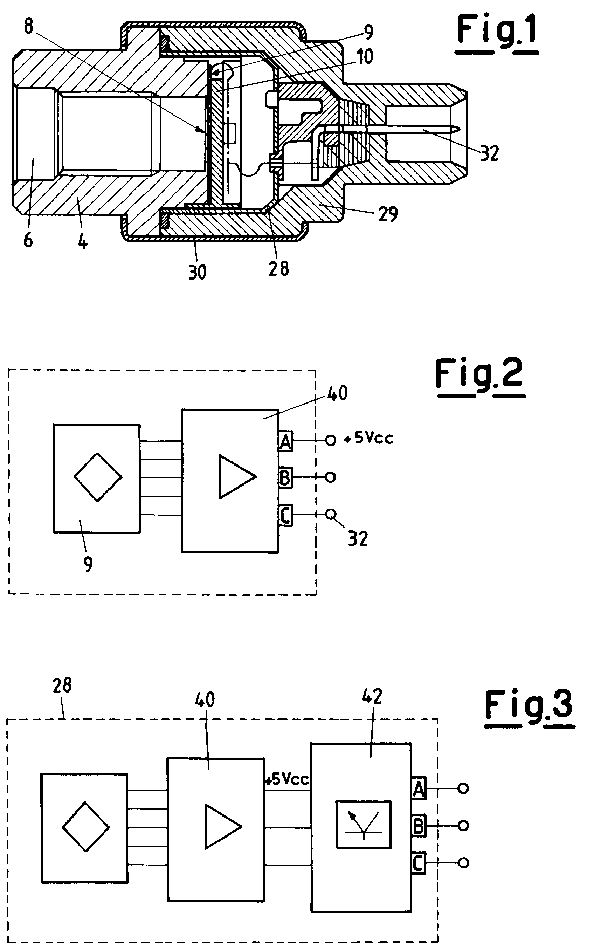

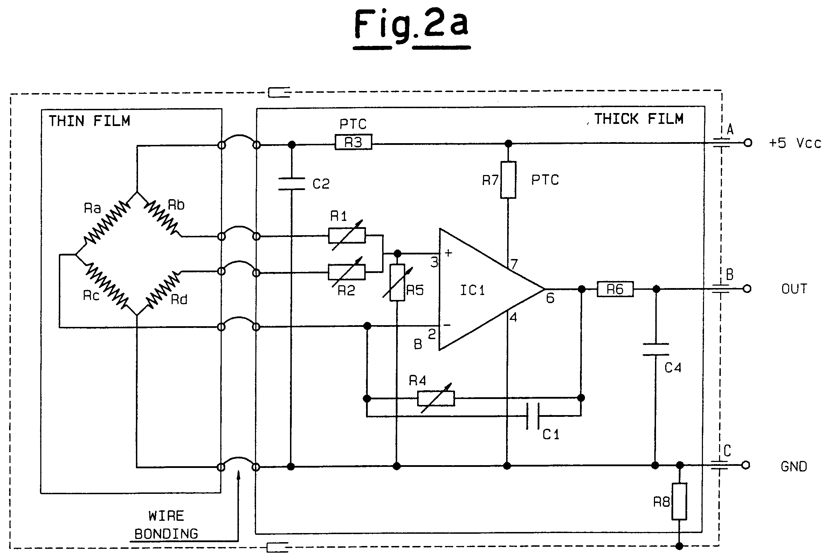

With reference to Figure 1, numeral 4 indicates the body of a sensor, provided with an axial hole 6, and fit to be put in contact with the environment or with the element to be checked. The axial hole 6 ends, at one of the ends of the body 4 against a diaphragm 8 integral with said body 4 and having a thickness such that it can be deformed by the existing pressure inside the hole 6. On the (outer) upper surface of diaphragm 8 it is obtained a thin film 9 electronic circuit (Figure 2), comprising a strain gauge able to measure the diaphragm strain when it is subjected to pressures other than the normal control pressure.

The strain gauge signal undergoes amplification through an amplification circuit 40, comprising also thermal compensation means, positioned on a support 10 over the thin film circuit 8. On the same support 10, according to the different final uses of the sensor, there are other devices, such as for example a voltage adjusting device, a voltage/current converter, a Pulse Width Modulation (PWM) generator or a micro control, shown in Figures 2-6. The diaphragm thickness and the thin film circuit geometry could, of course, be sized for different pressure ranges and application specifications. The all system (diaphragm, circuit, checking devices) is housed inside a Faraday cage 28 in order to avoid external influences on the sensor output signal. The Faraday cage 28, on the other hand, is surrounded by a plastic material shell 29, attached to the body 4 by a clamp 30, and supporting at least three bar contacts 32 in order to connect the pressure sensor to the input, to the ground and to the apparatus using the output signal.

In Figures 2-6, there are shown various embodiments of the integrated circuit inside the Faraday cage, directly on the sensor. In the Figure 2 embodiment, the pressure sensor, provided with a signal amplification device 40, is fed directly by the +5 V dc coming from the microprocessor control unit. It provides a voltage proportionate to the pressure applied to the diaphragm, and the output usually ranges between 0,15V and 4,85V. The ground cable (GND) is connected to the corresponding location point inside the control unit (not shown). Usually said location point is a star connection located close to the A/D converter on the side of the unit, wherein both the analogy mass and the digital mass are also gathered. The output is protected against the ground short circuit and against the +5 V dc ones. In this embodiment the sensor is protected both against electromagnetic disturbances coming from the outside environment (irradiated and conductive disturbances), and against the ones self produced.

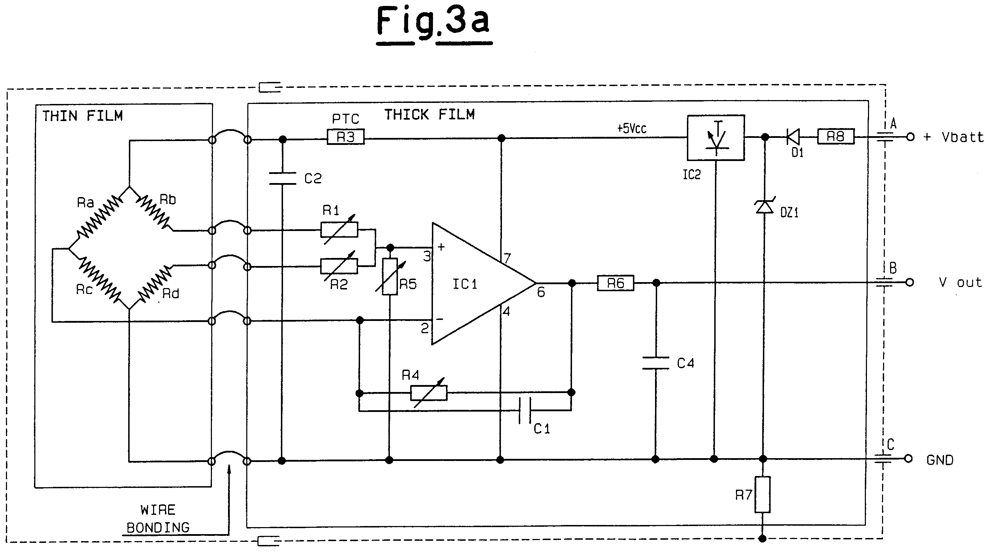

In the embodiment shown in Figure 3, the sensor comprises, besides the signal amplification circuit 40, the electric input directly from the line voltage of the electric system on board the vehicle (+12 V dc), and therefore it is provided the installation of a voltage regulator 42 on support 10.

The ground cable is connected to the corresponding reference point on the control unit (not shown).

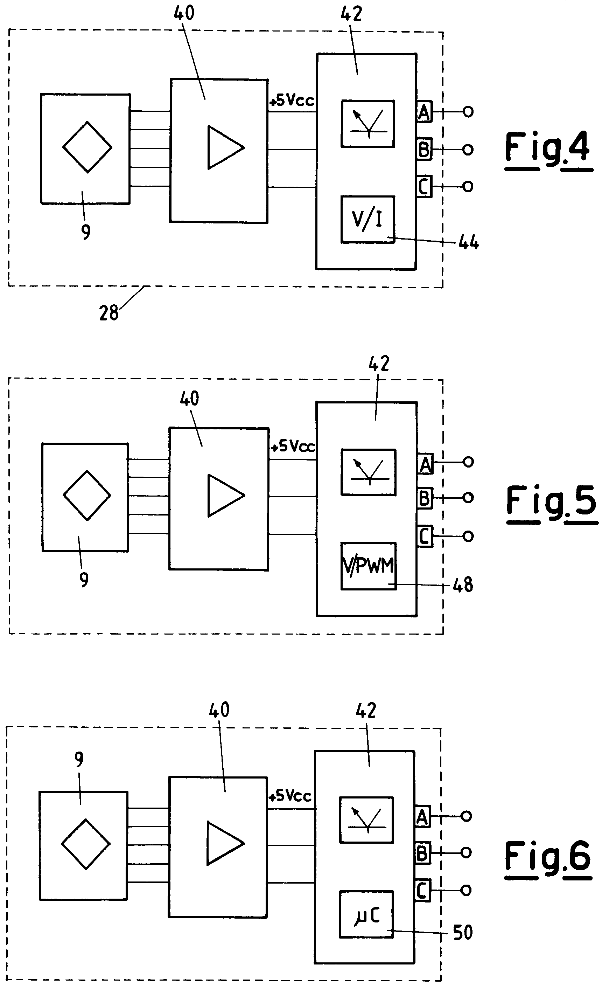

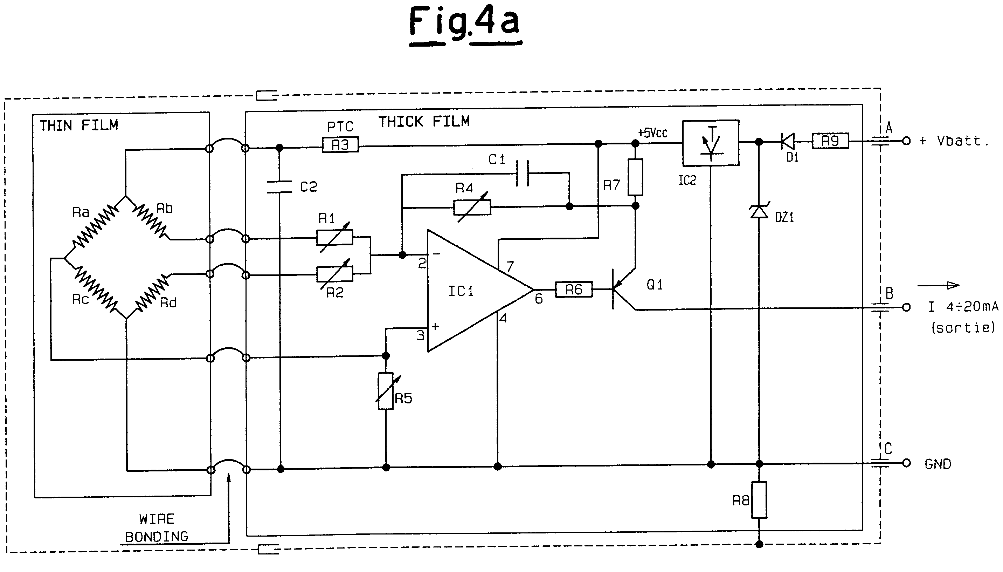

Figure 4 shows a sensor embodiment which comprises, besides the amplifier 40 and the regulator 42, also a voltage/current converter. In this case the output is provided as current source or as current sink, according to a current-loop standard 4-20 mA configuration.

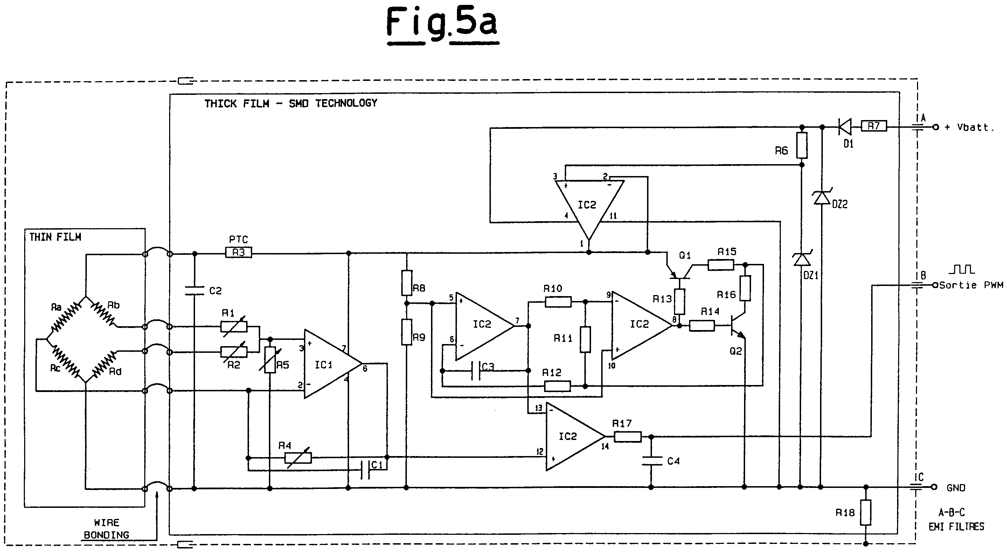

In a further embodiment (Figure 5), the sensor has a Pulse Width Modulation (PWM) generator 48.

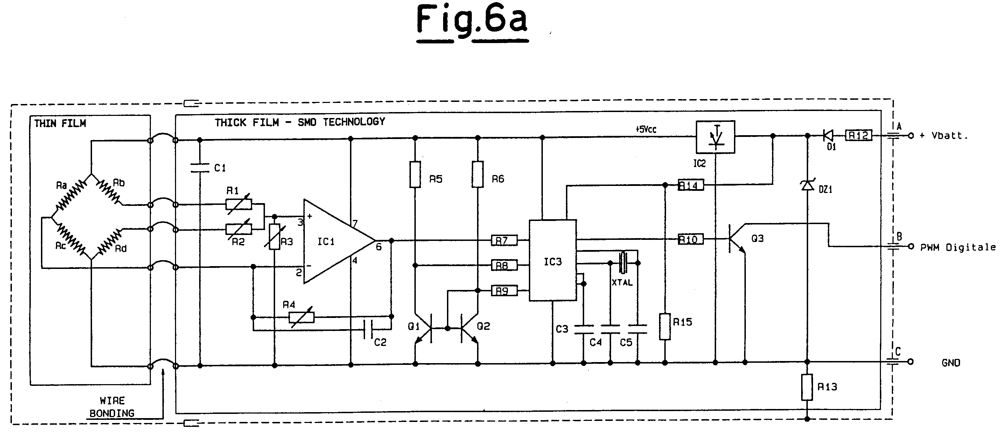

The embodiment shown in Figure 6 provides the use of a micro controller 50, contained inside the Faraday cage. The device is provided with a temperature sensor, and the micro controller 50 carries out the thermal compensation of the temperature deviations of the remaining pressure sensor. In this case, as an output information, it is provided a serial digital transmission on a balanced line, however, due to the micro controller presence, other electric interfaces are readily feasible. The input, as per other previous examples, is at +12 V dc. According to a second configuration, the micro controller will be able to carry out both the thermal compensation of the sensor temperature deviations, and the automatic gain regulation.

According to the invention the thin film circuit is obtained directly on the diaphragm 8 outer surface (in reference to the axial hole) through the process hereinafter described. First it is necessary to proceed to a thorough multiple step lapping of the surface, in order to obtain the smoothest and most uniform surface to avoid subsequent process defects. They then proceed with the deposition on the lapped surface of a solid insulating substrate, usually made of SiO₂, by means of the chemical plasma process technique. On said layer, it is then deposited in subsequent steps the strain gauge circuit with its conductive and welding tracks. The process is carried out in subsequent steps through metal sputtering techniques, using the most suitable materials based on the product requirements, the deposition according to the established layout is obtained through suitable masking of the ionic sputtering flow and litho-photographic systems for providing a suitable layout.

It is, therefore, obtained according to the invention a thin film microelectronic circuit directly on the diaphragm 8 surface, without any bonding, which, as said before, could become unreliable. In addition the process, as described, will bring a production cost reduction.

## Claims

1. A pressure sensor suitable, in particular for use in motor vehicles, comprising a body (4) supporting an elastic means (8) suitable to be deformed by the applied pressure, provided with a microelectronic circuit (9) comprising a resistive strain gauge, characterised in that:
- said means suitable to deformation is obtained as an integral part of the body (4) of said sensor;
- said microelectronic circuit (9) is realised using the thin-film technique, and is connected to an amplification (40) circuit comprising temperature compensation means.

2. The sensor of claim 1, characterised in that the elastic means suitable to deformation is a diaphragm (8) obtained integral with the body (4).

3. The sensor of claim 1, characterised in that said amplification circuit is located on a support (10) contained inside the sensor.

4. The sensor of claim 1, characterised in that the microelectronic circuit and the amplification circuit are protected by a housing (28) of metallic material suitable to avoid outside influences on the output signal.

5. The sensor of claims 1 to 3, characterised in that, besides the amplification circuit (40), it is present on the support (10) a voltage regulator (42).

6. The sensor of claims 1 to 3, characterised in that, besides the amplification circuit (40) and the voltage regulator (42), it is present on the support (10) a voltage/current converter (44).

7. The sensor of claims 1 to 3, characterised in that, besides the amplification circuit (40) and the voltage regulator (42), it is present on the support (10) a Pulse Width Modulation (PWM) generator (48).

8. The sensor of claims 1 to 3, characterised in that, besides the amplification circuit (40) and the voltage regulator (42), it is present on the support (10) a micro controller (50).

9. A process for obtaining the sensor of claims 1 and 2, characterised in that it comprises the following steps:
- lapping, through several subsequent steps, of the surface of the diaphragm (8) suitable to deformation wherein it will be obtained the thin film circuit comprising a strain gauge;
- depositing of an insulating solid substrate through a chemical plasma process;
- depositing the strain gauge resistive circuit and the relevant conductive tracks by metal sputtering, making use of multiple masking means and litho-photographic systems for providing a proper layout.
